# FASCICULE DE BREVET EUROPEEN

(11) **EP 3 394 796 B1**
(45) Date de publication et mention de la délivrance du brevet: **09.12.2020**
(21) Numéro de dépôt: 16829421.3
(22) Date de dépôt: 23.12.2016
(51) Int. Cl.: G06K 19/07, G06K 19/077

(54) **DISPOSITIF ÉLECTRONIQUE DE COMMUNICATION SANS FIL COMPORTANT DEUX PUCES ÉLECTRONIQUES ET PROCÉDÉ DE FABRICATION D'UN TEL DISPOSITIF**
ELEKTRONISCHE DRAHTLOSKOMMUNIKATIONSVORRICHTUNG MIT ZWEI ELEKTRONISCHEN CHIPS UND VERFAHREN ZUR HERSTELLUNG SOLCH EINER VORRICHTUNG
ELECTRONIC WIRELESS COMMUNICATION DEVICE COMPRISING TWO ELECTRONIC CHIPS AND METHOD FOR MANUFACTURING SUCH A DEVICE

(30) Priorité: 23.12.2015 FR 1563265
(43) Date de publication de la demande: 31.10.2018
(73) Titulaire: IDEMIA France, 92700 Colombes (FR)
(72) Inventeur: ALI, Ahmed, 92700 Colombes (FR); BOSQUET, Olivier, 92700 Colombes (FR)
(74) Mandataire: Cabinet Beau de Loménie
(86) Numéro de dépôt international: PCT/FR2016/053658
(87) Numéro de publication internationale: WO 2017/109434

(56) Documents cités:
- EP-A1- 1 031 939
- EP-A1- 2 098 981
- JP-A- 2003 331 238
- US-A1- 2008 308 641

## Description

### Arrière-plan de l'invention

La présente invention se rapporte au domaine des dispositifs électroniques de communication sans fil, comportant au moins deux puces électroniques, chacune étant associée à une antenne respective afin de communiquer avec un terminal externe.

L'invention s'applique notamment, mais de façon non exclusive, aux cartes à puce, telles que des cartes bancaires de format ID-1 spécifiées dans la norme ISO 7810, présentant les dimensions 85,6 millimètres par 53,98 millimètres par 0,76 millimètres et comportant deux puces électroniques.

De façon connue, un dispositif électronique de communication sans fil, tel qu'une carte à puce, peut comprendre deux puces électroniques, chaque puce ayant une fonction différente.

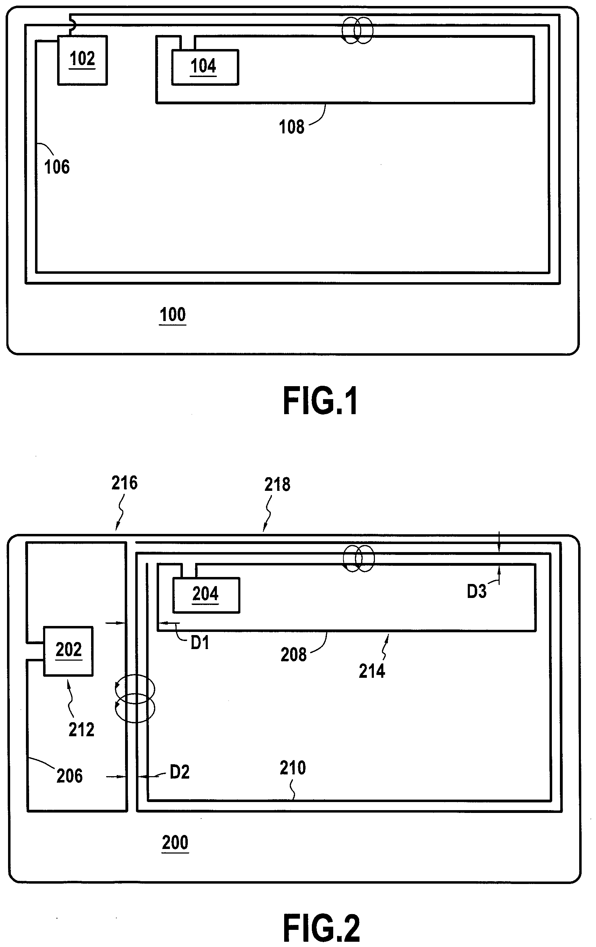

La **figure 1** représente un tel dispositif 100 électronique de communication sans fil, prenant la forme d'une carte à puce. Le dispositif 100 comprend une première puce électronique 102 et une deuxième puce électronique 104.

La première puce électronique 102 est connectée électriquement à une première antenne 106, et est configurée pour communiquer avec un terminal externe au moyen de la première antenne 106 selon un premier protocole de communication. La première puce électronique 102 a une fonction de paiement sans contact.

La deuxième puce électronique 104 est connectée électriquement à une deuxième antenne 108, et est configurée pour communiquer avec un terminal externe au moyen de la deuxième antenne 108 selon un deuxième protocole de communication. La deuxième puce électronique 104 a une fonction de contrôle d'un afficheur de code de vérification dynamique (« motion code » en terminologie anglo-saxonne) du dispositif 100.

La bande de fréquence de communication opérationnelle de l'ensemble comportant la première puce électronique 102 et la première antenne 106 est plus grande que la bande de fréquence de communication opérationnelle de l'ensemble comportant la deuxième puce électronique 104 et la deuxième antenne 108, et les deux bandes de fréquence de communication opérationnelle sont très proches car comprises dans la bande de fréquence de communication d'un terminal externe.

Une isolation électromagnétique complète des deux antennes est ainsi impossible, car les technologies de radio fréquence utilisées dans les cartes à puce ne sont pas sélectives au point de pouvoir isoler la bande de fréquence de communication opérationnelle de l'ensemble comportant la première puce 102 et la première antenne 106 de la bande de fréquence de communication opérationnelle de l'ensemble comportant la deuxième puce 104 de la deuxième antenne 108, dans la bande de fréquence de communication du terminal externe, qui est par exemple une bande allant de 12 mégahertz à 19 mégahertz et qui peut varier d'un terminal externe à l'autre.

Afin de capter suffisamment de flux électromagnétique émis par un terminal externe pour que la première puce électronique 102 puisse communiquer avec le terminal externe, la première antenne 106 est de dimensions assez importantes. De même, afin de capter suffisamment de flux électromagnétique émis par un terminal externe pour que la deuxième puce électronique 104 puisse communiquer avec le terminal externe, la deuxième antenne 108 est de dimensions assez importantes, toutefois moins importantes que les dimensions de la première antenne 106.

La petite taille du dispositif 100 et la taille importante des deux antennes 106 et 108 implique que les antennes 106, 108 sont disposées à proximité l'une de l'autre dans le dispositif 100. Cette proximité physique des antennes 106, 108 engendre un phénomène de couplage électromagnétique parasite entre les deux antennes 106, 108.

Le couplage électromagnétique parasite dégrade les performances des antennes 106, 108 ce qui implique des problèmes de communication pour chaque antenne 106, 108.

Plus précisément, lors d'une communication entre la première puce 102 et un terminal externe au moyen de la première antenne 106, la deuxième antenne 108 consomme de l'énergie et entraîne un déplacement de la bande de fréquence opérationnelle de l'ensemble comportant la première puce 102 et la première antenne 106, car le flux effectif capté par la première antenne 106 en présence de la deuxième antenne 108 est réduit, ce qui implique une inductance réduite et une fréquence de résonnance décalée vers les hautes fréquences.

La personnalisation, par un terminal externe, de la première puce électronique 102, ainsi que le paiement au moyen de la première puce électronique 102 est ainsi difficile à mettre en œuvre, par exemple parce que la bande de fréquence opérationnelle de l'ensemble comportant la première puce 102 et la première antenne 106 n'est plus comprise dans la bande de fréquence de communication optimisée du terminal externe.

De même, lors d'une communication entre la deuxième puce 104 et un terminal externe au moyen de la deuxième antenne 108, la première antenne 106 consomme de l'énergie, ce qui entraîne un déplacement de la bande de fréquence opérationnelle de l'ensemble comportant la deuxième puce 104 et la deuxième antenne 108. La personnalisation, par un terminal externe, de la deuxième puce électronique 104 est alors difficile à mettre en œuvre.

Il existe donc un besoin pour une solution permettant de conserver les bandes de fréquence de communication opérationnelle du dispositif tout en minimisant couplage électromagnétique parasite entre les antennes.

Le document JP 2003-331238 décrit une carte à circuit intégré.

### Objet et résumé de l'invention

La présente invention concerne un dispositif électronique de communication sans fil selon la revendication 1, le dispositif sans fil comprenant :
- une première puce électronique et une deuxième puce électronique,
- une première antenne connectée électriquement à la première puce électronique, et
- une deuxième antenne connectée électriquement à la deuxième puce électronique,
le dispositif électronique comprenant en outre une troisième antenne adaptée pour être couplée de manière électromagnétique avec la première antenne et la deuxième antenne, de sorte que :
- la première puce électronique est configurée pour communiquer avec un premier terminal externe, selon un premier protocole, au moyen d'une première paire d'antenne formée par la première antenne et la troisième antenne, et
- la deuxième puce électronique est configurée pour communiquer avec le premier terminal externe et/ou un deuxième terminal externe, selon un deuxième protocole, au moyen une deuxième paire d'antenne formée par la deuxième antenne et la troisième antenne.

La bande de fréquence de communication d'un ensemble comportant la première puce électronique et la première paire d'antenne étant élargie par rapport à la bande de fréquence de communication d'un ensemble comportant la première puce électronique et la première antenne, la première puce peut communiquer avec un plus grand nombre de terminaux externes.

De même, la bande de fréquence de communication d'un ensemble comportant la deuxième puce électronique et la deuxième paire d'antenne étant élargie par rapport à la bande de fréquence de communication d'un ensemble comportant la deuxième puce électronique et la deuxième antenne, la deuxième puce peut communiquer avec un plus grand nombre de terminaux externes.

La première antenne formant avec la troisième antenne une première paire d'antenne, il est possible de réduire la taille de la première antenne tout en conservant de bonnes performances de communication. En effet, la troisième antenne permet de capter plus de flux électromagnétique.

De même, la deuxième antenne formant avec la troisième antenne une deuxième paire d'antenne, il est possible de réduire la taille de la deuxième antenne tout en conservant de bonnes performances de communication.

Les dimensions de la première antenne et de la deuxième antenne étant réduites, il est possible d'éloigner la première antenne de la deuxième antenne et de la disposer de sorte à limiter l'effet de couplage parasite entre les première et deuxième antennes.

Dans un mode de réalisation particulier, la surface délimitée par la troisième antenne est supérieure à la surface délimitée par la première antenne et/ou la surface délimitée par la deuxième antenne.

Les dimensions importantes de la troisième antenne permettent à la troisième antenne de capter un important flux électromagnétique, qui est cumulé au flux capté par la première antenne ou au flux capté par la deuxième antenne. Il est ainsi possible de réduire les dimensions de la première antenne et de la deuxième antenne en conservant de bonnes performances de communication.

Les dimensions de la première antenne et de la deuxième antenne étant réduites, il est possible d'éloigner la première antenne de la deuxième antenne et de la disposer de sorte à limiter l'effet de couplage parasite entre les première et deuxième antennes.

Dans un mode de réalisation particulier, la surface délimitée par la première antenne est sensiblement identique à la surface délimitée par la deuxième antenne.

Ainsi, les performances de la première antenne sont sensiblement égales aux performances de la deuxième antenne, et il est possible d'utiliser le même terminal de communication externe pour communiquer avec les deux puces électroniques.

Les première, deuxième et troisième antennes sont sensiblement planes et présentent chacune une forme allongée définissant une longueur et une largeur, les première, deuxième et troisième antennes étant disposées de telle sorte que :
- la projection de la direction longitudinale de la première antenne dans le plan de la troisième antenne est parallèle à la direction latérale de la troisième antenne, et
- la projection de la direction longitudinale de la deuxième antenne dans le plan de la troisième antenne est parallèle à la direction longitudinale de la troisième antenne.

Ainsi, l'effet de couplage parasite entre la première antenne et la deuxième antenne est réduit.

Dans un mode de réalisation particulier, la première antenne est disposée à une première distance de la deuxième antenne et à une deuxième distance de la troisième antenne, la première distance étant plus grande que la deuxième distance.

Dans un mode de réalisation particulier, la troisième antenne est sensiblement plane et les première, deuxième et troisième antennes sont disposées de telle sorte que la projection de la première antenne dans le plan de la troisième antenne s'étend à l'extérieur de la troisième antenne et la projection de la deuxième antenne dans le plan de la troisième antenne s'étend à l'intérieur de la troisième antenne.

Ainsi, l'effet de couplage parasite entre la première antenne et la deuxième antenne est réduit.

Dans un mode de réalisation particulier, la bande de fréquence de fonctionnement de la troisième antenne prise isolément est plus grande que la bande de fréquence de fonctionnement d'un premier ensemble comportant la première puce électronique et la première antenne pris isolément ou que la bande de fréquence de fonctionnement d'un deuxième ensemble comportant la deuxième puce électronique et de la deuxième antenne pris isolément.

Dans un mode de réalisation particulier, la largeur de la bande de fréquence de fonctionnement d'un premier ensemble comportant la première puce électronique et la première antenne pris isolément est sensiblement identique à la bande de fréquence de fonctionnement d'un deuxième ensemble comportant la deuxième puce électronique et la deuxième antenne pris isolément.

Ainsi, le même terminal externe peut être utilisé pour communiquer avec la première puce électronique et la deuxième puce électronique.

Dans un mode de réalisation particulier,
- un troisième ensemble comportant la première puce et la première paire d'antenne fonctionne dans une première bande de fréquence continue, et
- un quatrième ensemble comportant la deuxième puce et la deuxième paire d'antenne fonctionne dans une deuxième bande de fréquence continue.

Dans un mode de réalisation particulier, le protocole de communication de la première puce électronique est défini par la norme ISO 14443 et le protocole de communication de la deuxième puce électronique est défini par la norme ISO 15693.

Dans un mode de réalisation particulier,
- la première puce électronique est configurée pour communiquer avec le premier terminal externe, au moyen de la première paire d'antenne, à une fréquence d'environ 13, 56 mégahertz, et/ou
- la deuxième puce électronique est configurée pour communiquer avec le premier terminal externe et/ou le deuxième terminal externe, au moyen de la deuxième paire d'antenne, à une fréquence d'environ 13, 56 mégahertz.

Dans un mode de réalisation particulier, la première puce électronique est configurée pour effectuer un paiement et la deuxième puce électronique est configurée pour contrôler un composant électronique dudit dispositif.

Dans un mode de réalisation particulier, le composant électronique est un écran adapté à afficher un code de sécurité.

Dans un mode de réalisation particulier, le dispositif comprend des chiffres d'identification, le code de sécurité étant destiné à être utilisé en combinaison avec les chiffres d'identification pour effectuer un paiement.

Dans un mode de réalisation particulier, le dispositif électronique est une carte à puce de format ID-1 défini par la norme ISO 7810.

L'invention concerne en outre un procédé selon la revendication 15, de fabrication d'un dispositif électronique tel que précédemment décrit, ledit procédé comprenant :
- la formation de la troisième antenne sur une couche d'un premier substrat comprenant au moins une couche,
- la formation de la première antenne sur un deuxième substrat ou sur le premier substrat,
- le positionnement de la première puce sur le premier substrat ou sur le deuxième substrat,
- la formation de la deuxième antenne sur un troisième substrat ou sur le premier substrat, et
- le positionnement de la deuxième puce sur le premier substrat ou sur le troisième substrat.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1, déjà décrite, est une vue schématique de dessus d'un dispositif électronique de communication sans fil conventionnel ;
- la figure 2 est une vue schématique de dessus d'un dispositif électronique de communication sans fil conforme à un exemple de mode de réalisation de l'invention ;
- la figure 3 est un schéma électrique correspondant à un dispositif électronique de communication sans fil conforme à un exemple de mode de réalisation de l'invention ;
- la figure 4 représente, de manière schématique, des bandes de fréquence de fonctionnement d'un dispositif électronique de communication sans fil conforme à un exemple de mode de réalisation de l'invention ;
- la figure 5 est une vue schématique de dessus d'un dispositif électronique de communication sans fil conforme à un exemple de mode de réalisation de l'invention ;
- la figure 6 est un graphe montrant un exemple d'évolution de coefficients de réflexion d'un dispositif électronique de communication sans fil conforme à un exemple de mode de réalisation de l'invention ;
- la figure 7 représente, de manière schématique, des exemples de gabarits de résonnance du dispositif de la figure 6 ;
- la figure 8 est un graphe montrant un exemple d'évolution de coefficients de réflexion d'un dispositif électronique de communication sans fil conforme à un exemple de mode de réalisation de l'invention ;
- la figure 9 représente, de manière schématique, un exemple de gabarit de résonnance du dispositif de la figure 8 ;
- la figure 10 représente, sous forme d'un organigramme, les principales étapes d'un procédé de fabrication d'un dispositif électronique de communication sans fil conforme à un exemple de mode de réalisation de l'invention ;
- la figure 11 est une vue schématique de dessus d'un dispositif électronique de communication sans fil conforme à un exemple de mode de réalisation de l'invention ;
- la figure 12 est une vue en coupe A-A du dispositif électronique de communication sans fil de la figure 11.

### Description détaillée de plusieurs modes de réalisation

La présente invention se rapporte au domaine des dispositifs électroniques de communication sans fil, comportant au moins deux puces électroniques, chacune étant associée à une antenne respective afin de communiquer avec un terminal externe.

La **figure 2** est une vue de dessus, en transparence, d'un dispositif 200 électronique de communication sans fil conforme à un exemple de mode de réalisation de l'invention. Le dispositif 200 comprend une première puce électronique 202 et une deuxième puce électronique 204.

Le dispositif 200 comprend en outre une première antenne 206, connectée électriquement à la première puce électronique 202, et une deuxième antenne 208 connectée électriquement à la deuxième puce électronique 204.

De plus, le dispositif 200 comprend une troisième antenne 210, adaptée pour être couplée de manière électromagnétique avec la première antenne 206, de sorte que la première puce électronique 202 est configurée pour communiquer avec un premier terminal externe, selon un premier protocole, au moyen d'une première paire d'antenne formée par la première antenne 206 et la troisième antenne 210.

De plus, la troisième antenne 210 est adaptée pour être couplée de manière électromagnétique avec la deuxième antenne 208, de sorte que la deuxième puce électronique 204 est configurée pour communiquer avec le premier terminal externe et/ou un deuxième terminal externe, selon un deuxième protocole, au moyen une deuxième paire d'antenne formée par la deuxième antenne 208 et la troisième antenne 210.

Par « une première paire d'antenne formée par la première antenne 206 et la troisième antenne 210 » on entend que la première paire d'antenne est formée par le couplage de la première antenne 206 avec la troisième antenne 210. De même, par « une deuxième paire d'antenne formée par la deuxième antenne 208 et la troisième antenne 210 » on entend que la deuxième paire d'antenne est formée par le couplage de la deuxième antenne 208 avec la troisième antenne 210.

La première puce électronique 202 ainsi que la première antenne 206 forment un premier ensemble de communication 212. En outre, la deuxième puce électronique 204 ainsi que la deuxième antenne 208 forment un deuxième ensemble de communication 214.

La première puce électronique 202, ainsi que la première antenne 206 couplée à la troisième antenne 210, c'est-à-dire la première paire d'antenne, forment un troisième ensemble de communication 216. En outre, la deuxième puce électronique 204 ainsi que la deuxième antenne 208 couplée à la troisième antenne 210, c'est-à-dire la deuxième paire d'antenne, forment un quatrième ensemble de communication 218.

En variante, le dispositif 200 comporte plus de deux puces électroniques. Chaque puce électronique est alors connectée électriquement à une antenne respective, chaque antenne étant couplée avec une même antenne de couplage.

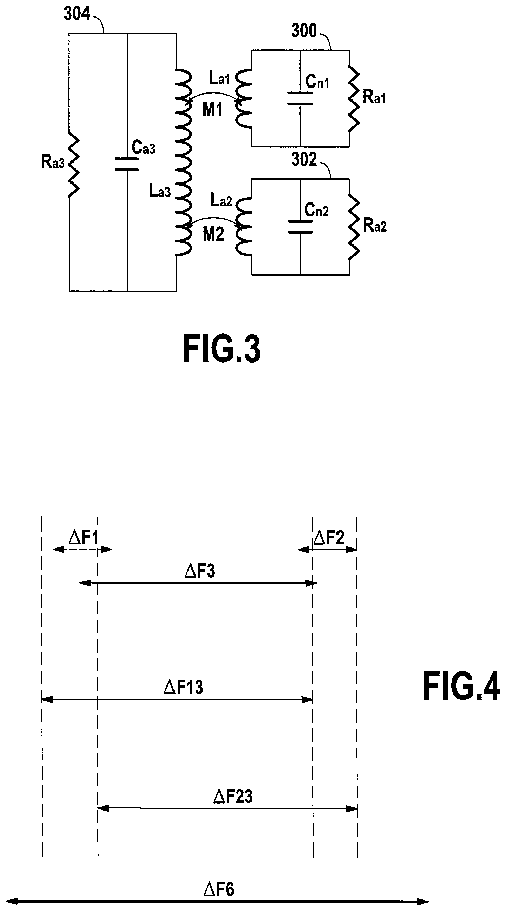

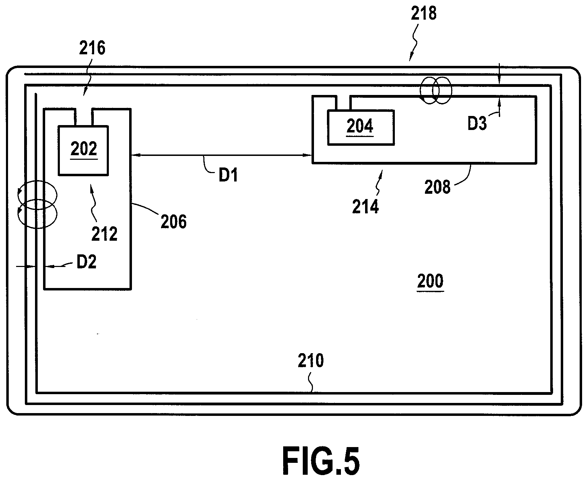

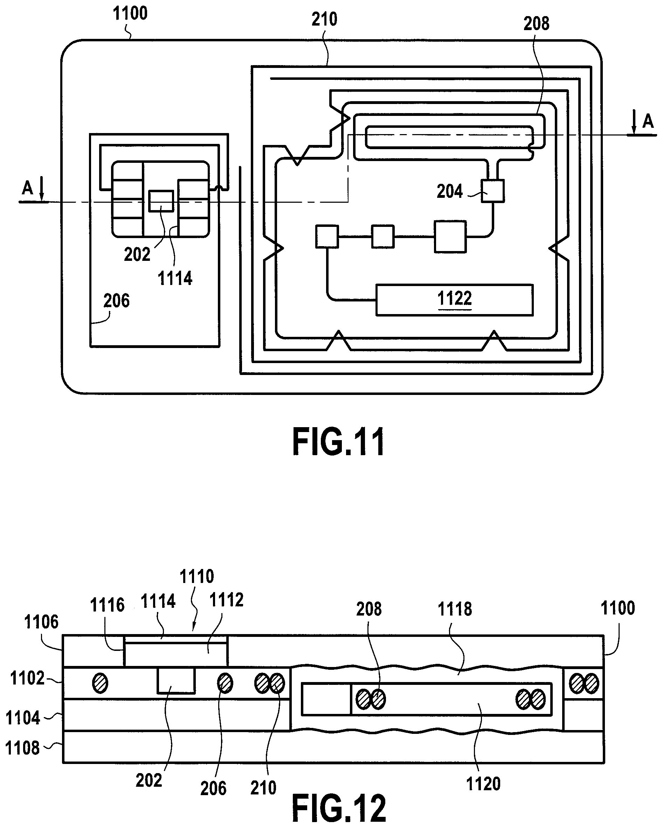

La **figure 3** représente un schéma électrique correspondant à un dispositif 200 conforme à un exemple de mode de réalisation de l'invention, par exemple au dispositif de la figure 2, de la figure 5, ou de la figure 11. Plus précisément, le schéma électrique montre le détail du circuit équivalent de chaque antenne 206, 208, 210 et puce électronique 202, 204, ainsi que le couplage mutuel entre la troisième antenne 210 et les deux autres antennes 206, 208.

Le schéma électrique comporte un premier circuit RLC 300 correspondant au premier ensemble de communication 212, un deuxième circuit RLC 302 correspondant au deuxième ensemble de communication 214, et un troisième circuit RLC 304 correspondant à la troisième antenne.

Le premier circuit RLC 300 comporte une première bobine Lₐ₁ connectée en parallèle à un premier condensateur Cₙ₁ et une première résistance Rₐ₁. La première bobine Lₐ₁ correspond à l'impédance de la première antenne 206, la première résistance Rₐ₁ correspond à la résistance de la première antenne 206, et le premier condensateur Cₙ₁ correspond à la capacité de la première antenne 206 additionnée à la capacité de la première puce électronique 202.

Le deuxième circuit RLC 302 comporte une deuxième bobine Lₐ₂ connectée en parallèle à un deuxième condensateur Cₙ₂ et une deuxième résistance Rₐ₂. La deuxième bobine Lₐ₂ correspond à l'impédance de la deuxième antenne 208, la deuxième résistance Rₐ₂ correspond à la résistance de la deuxième antenne 208, et le deuxième condensateur Cₙ₂ correspond à la capacité de la deuxième antenne 208 additionnée à la capacité de la deuxième puce électronique 204.

Le troisième circuit RLC 304 comporte un troisième ensemble comportant une troisième bobine Lₐ₃ connectée en parallèle à un troisième condensateur Cₐ₃ et une troisième résistance Rₐ₃. La troisième bobine Lₐ₃ correspond à l'impédance de la troisième antenne 210, la troisième résistance Rₐ₃ correspond à la résistance de la troisième antenne 210, et le troisième condensateur Cₐ₃ correspond à la capacité de la troisième antenne 210.

Le couplage M1 entre la première bobine Lₐ₁ du premier circuit RLC 300 et la troisième bobine Lₐ₃ du troisième circuit RLC 304 représente le couplage entre la première antenne 206 et la troisième antenne 210. En outre, le couplage M2 entre la deuxième bobine Lₐ₂ du deuxième circuit RLC 302 et la troisième bobine Lₐ₃ du troisième circuit RLC 304 représente le couplage entre la deuxième antenne 208 et la troisième antenne 210.

Ainsi, comme le montre la figure 3, la troisième antenne 210 est couplée de manière électromagnétique avec la première antenne 206, couplée de manière électromagnétique avec la deuxième antenne 208, n'est pas connectée électriquement à la première puce 202, et n'est pas connectée électriquement à la deuxième puce 204.

La **figure 4** représente schématiquement des bandes de fréquence de fonctionnement d'un dispositif 200 conforme à un exemple de mode de réalisation de l'invention, par exemple le dispositif de la figure 2, de la figure 5, ou de la figure 11.

Le premier ensemble 212 pris isolément fonctionne dans une première bande de fréquence ΔF1, le deuxième ensemble 214 pris isolément fonctionne dans une deuxième bande de fréquence ΔF2, et la troisième antenne 210 prise isolément fonctionne dans une bande de fréquence ΔF3.

Par « pris isolément », on entend que l'antenne ou l'antenne de l'ensemble n'est pas couplée avec une autre antenne du dispositif 200.

Lorsque la première puce électronique 202 est activée, le troisième ensemble 216 fonctionne dans une quatrième bande de fréquence ΔF13 de fonctionnement ou de communication opérationnelle. La quatrième bande de fréquence ΔF13 comprend la première bande de fréquence ΔF1 et est plus large que la première bande de fréquence ΔF1.

De même, lorsque la deuxième puce électronique 204 est activée, le quatrième ensemble 218 fonctionne dans une cinquième bande de fréquence ΔF23 de fonctionnement ou de communication opérationnelle. La cinquième bande de fréquence ΔF23 comprend la deuxième bande de fréquence ΔF2 et est plus large que la deuxième bande de fréquence ΔF2.

La quatrième bande de fréquence ΔF13 et la cinquième bande de fréquence ΔF23 ont une plage de fréquence commune, correspondant approximativement à la troisième bande de fréquence ΔF3. Ainsi, un terminal communiquant à une fréquence comprise dans la plage de fréquence commune peut communiquer avec la première puce électronique 202, si le terminal communique selon le premier protocole, ou avec la deuxième puce électronique 204, si le terminal communique selon le deuxième protocole.

La figure 4 montre aussi une sixième bande de fréquence ΔF6 de fonctionnement d'un terminal externe, par exemple le premier terminal externe ou le deuxième terminal externe.

Dans un exemple, la première puce électronique 202 communique avec un terminal, par exemple le premier terminal, au moyen de la première paire d'antenne, à une fréquence d'environ 13, 56 mégahertz, par exemple de 13, 56 mégahertz. En outre, dans un exemple, la deuxième puce électronique 204 communique avec ledit terminal et/ou un autre terminal, par exemple le deuxième terminal, au moyen de la deuxième paire d'antenne, à une fréquence d'environ 13, 56 mégahertz, par exemple de 13, 56 mégahertz.

La quatrième bande de fréquence ΔF13 étant élargie par rapport à la première bande de fréquence ΔF1, la première puce 202 peut communiquer avec un plus grand nombre de terminaux externes. En effet, les terminaux externes ne fonctionnent pas tous selon la même bande de fréquence.

De même, la cinquième bande de fréquence ΔF23 étant élargie par rapport à la deuxième bande de fréquence ΔF2, la deuxième puce 204 peut communiquer avec un plus grand nombre de terminaux externes.

La quatrième bande de fréquence ΔF13 ou la cinquième bande de fréquence ΔF23 représente un sous-ensemble du gabarit de résonance globale du dispositif 200.

La première antenne 206 formant avec la troisième antenne 210 une première paire d'antenne, il est possible de réduire la taille de la première antenne 206 tout en conservant de bonnes performances de communication. En effet, la troisième antenne 210 permet de capter plus de flux électromagnétique.

De même, la deuxième antenne 208 formant avec la troisième antenne 210 une deuxième paire d'antenne, il est possible de réduire la taille de la deuxième antenne 208 tout en conservant de bonnes performances de communication.

Les dimensions de la première antenne 206 et de la deuxième antenne 208 étant réduites, il est possible d'éloigner la première antenne 206 de la deuxième antenne 208 et de la disposer de sorte à limiter l'effet de couplage parasite entre les première et deuxième antennes 206, 208.

Lorsque le dispositif 200 n'est pas placé dans un champ électromagnétique, la première puce électronique 202 est en veille et la deuxième puce électronique 204 est en veille.

Lorsque le dispositif 200 est placé dans le champ électromagnétique d'un terminal externe communiquant selon le premier protocole, par exemple le premier terminal externe, la première puce électronique 202 est activée après reconnaissance du premier protocole, tandis que la deuxième puce 204 reste en veille. Le dispositif 200 présente alors la quatrième bande de fréquence ΔF13, dans laquelle une communication effective avec le terminal externe est possible.

La première puce 202 et le terminal externe peuvent ainsi communiquer dans la quatrième bande de fréquence ΔF13 selon le premier protocole, la deuxième antenne 208, associée au deuxième protocole, étant alors sans effet, car en résonance muette.

Le transfert d'énergie, c'est-à-dire le flux électromagnétique capté est alors plus important pour la première paire d'antenne associée à la première puce électronique 202, c'est-à-dire le troisième ensemble 216. En effet, l'activation de la première puce électronique 202 augmente la capacité de la première puce électronique 202, ce qui diminue la fréquence de résonance du troisième ensemble 216 afin de caler ladite fréquence de résonance sur la fréquence de résonance du terminal externe.

Lorsque le dispositif 200 est placé dans le champ électromagnétique d'un terminal externe communiquant selon le deuxième protocole, par exemple le premier terminal externe ou le deuxième terminal externe, la deuxième puce électronique 204 est activée après reconnaissance du deuxième protocole, tandis que la première puce 202 reste en veille. Le dispositif 200 présente alors la cinquième bande de fréquence ΔF23, dans laquelle une communication effective avec le terminal externe est possible.

La deuxième puce 204 et le terminal externe peuvent ainsi communiquer dans la cinquième bande de fréquence ΔF23 selon le deuxième protocole, la première antenne 206, associée au premier protocole, étant alors sans effet, car en résonance muette.

Le transfert d'énergie, c'est-à-dire le flux électromagnétique capté est alors plus important pour la deuxième paire d'antenne associée à la deuxième puce électronique 204, c'est-à-dire le quatrième ensemble 218. En effet, l'activation de la deuxième puce électronique 204 augmente la capacité de la deuxième puce électronique 204, ce qui diminue la fréquence de résonance du quatrième ensemble 218 afin de caler ladite fréquence de résonance sur la fréquence de résonance du terminal externe.

Le dispositif 200 est par exemple une carte à puce. En variante, le dispositif 200 est un autre document électronique, tel qu'un passeport électronique, une carte d'identité électronique ou équivalents, un module RFID (« RFID tag » en terminologie anglo-saxonne), ou un objet connecté.

Dans un exemple, le protocole de communication de la première puce est défini par la norme ISO 14443. En outre, dans un exemple le protocole de communication de la deuxième puce est défini par la norme ISO 15693.

Dans un exemple, la première puce électronique 202 est configurée pour effectuer un paiement. La première puce électronique 202 a ainsi une fonction de paiement sans contact. Une deuxième puce électronique est alors nécessaire pour gérer une autre fonction ou application, car les organismes bancaires imposent qu'une puce dédiée au paiement ne gère pas d'autres applications, pour des raisons de sécurité.

Dans un exemple, la deuxième puce 204 est configurée pour contrôler un composant électronique dudit dispositif 200. La deuxième puce électronique 204 a par exemple une fonction de contrôle d'un afficheur de code de vérification dynamique (« motion code » en terminologie anglo-saxonne) du dispositif 200, c'est-à-dire d'un écran adapté à afficher un code de sécurité.

Chaque antenne 206, 208, 210 prend la forme d'un enroulement comportant au moins une spire, l'enroulement étant sensiblement plan. Les antennes 206, 208, 210 sont ainsi sensiblement planes.

La première antenne 206 s'étend sur un premier plan, la deuxième antenne 208 s'étend sur un deuxième plan et la troisième antenne 210 s'étend sur un troisième plan. Les premier, deuxième et troisième plans sont sensiblement parallèles entre eux et au moins deux des premier, deuxième et troisième plans peuvent être confondus.

La troisième antenne 210 peut présenter de plus grandes dimensions que la première antenne 206 et de plus grandes dimensions que la deuxième antenne 208. La surface délimitée par la troisième antenne 210 peut être supérieure à la surface délimitée par la première antenne 206. De même, la surface délimitée par la troisième antenne 210 peut être supérieure la surface délimitée par la deuxième antenne 208.

Plus précisément, la surface du troisième plan délimitée par la troisième antenne 210 peut être supérieure à la surface du premier plan délimitée par la première antenne 206. En outre, la surface du troisième plan délimitée par la troisième antenne 210 peut être supérieure à la surface du deuxième plan délimitée par la deuxième antenne 208.

La surface délimitée par la troisième antenne 210 est par exemple deux fois plus grande que la surface délimitée par la première antenne 206, et est par exemple deux fois plus grande que la surface délimitée par la deuxième antenne 208.

Les dimensions importantes de la troisième antenne 210 permettent à la troisième antenne 210 de capter un important flux électromagnétique, qui est cumulé au flux capté par la première antenne 206 ou au flux capté par la deuxième antenne 208.

Afin de faire fonctionner la première puce 202, la première antenne 206 n'a ainsi pas besoin de capter autant de flux magnétique que le flux nécessaire à la première antenne 106 de la figure 1 pour faire fonctionner la première puce 102 de la figure 1. Il est possible de réduire les dimensions de la première antenne 206 en conservant de bonnes performances de communication.

De même, afin de faire fonctionner la deuxième puce 204, la deuxième antenne 208 n'a ainsi pas besoin de capter autant de flux magnétique que le flux nécessaire à la deuxième antenne 108 de la figure 1 pour faire fonctionner la deuxième puce 104 de la figure 1. Il est possible de réduire les dimensions de la deuxième antenne 208 en conservant de bonnes performances de communication.

Les dimensions de la première antenne 206 et de la deuxième antenne 208 étant réduites, il est possible d'éloigner la première antenne 206 de la deuxième antenne 208 et de la disposer de sorte à limiter l'effet de couplage parasite entre les première et deuxième antennes 206, 208.

Dans un exemple, la surface délimitée par la première antenne 206 est sensiblement identique à la surface délimitée par la deuxième antenne 208. Plus précisément, la surface du premier plan délimitée par la première antenne 206 est sensiblement identique à la surface du deuxième plan délimitée par la deuxième antenne 208. Ainsi, les performances de la première antenne 206 sont sensiblement égales aux performances de la deuxième antenne 208, et il est possible d'utiliser le même terminal de communication externe pour communiquer avec les deux puces électroniques 202, 204. Il suffit alors de contrôler le terminal externe afin d'utiliser le premier protocole de communication pour communiquer avec la première puce électronique 202, et le deuxième protocole de communication pour communiquer avec la deuxième puce électronique 204.

La première antenne 206, sensiblement plane, peut présenter une forme allongée définissant une longueur et une largeur de la première antenne 206. De même, la deuxième antenne 208, sensiblement plane, peut présenter une forme allongée définissant une longueur et une largeur de la deuxième antenne 208. De même, la troisième antenne 210, sensiblement plane, peut présenter une forme allongée définissant une longueur et une largeur de la troisième antenne 210. Les première, deuxième et troisième antennes 206, 208, 210 peuvent alors être disposées de telle sorte que la projection de la direction longitudinale de la première antenne 206 dans le plan de la troisième antenne 210 est parallèle à la direction latérale de la troisième antenne 210, et de sorte que la projection de la direction longitudinale de la deuxième antenne 208 dans le plan de la troisième antenne 210 est parallèle à la direction longitudinale de la troisième antenne 210.

L'effet de couplage parasite entre la première antenne 206 et la deuxième antenne 208 est ainsi réduit.

Les antennes 206, 208, 210 sont par exemple de forme sensiblement rectangulaire. Dans cet exemple, les première, deuxième et troisième antennes 206, 208, 210 sont disposées de telle sorte que la projection de la longueur de la première antenne 206 dans le plan de la troisième antenne 210 est parallèle à la largeur de la troisième antenne 210, et de sorte que la projection de la longueur de la deuxième antenne 208 dans le plan de la troisième antenne 210 est parallèle à la longueur de la troisième antenne 210.

En variante, les première, deuxième et troisième antennes 206, 208, 210 peuvent être disposées de telle sorte que la projection de la direction longitudinale de la première antenne 206 dans le plan de la troisième antenne 210 est parallèle à la direction longitudinale de la troisième antenne 210, et de sorte que la projection de la direction longitudinale de la deuxième antenne 208 dans le plan de la troisième antenne 210 est parallèle à la direction latérale de la troisième antenne 210.

La première antenne 206 est disposée à une première distance de la deuxième antenne 208 et à une deuxième distance de la troisième antenne 210, la première distance pouvant être plus grande que la deuxième distance. La première antenne 206 est ainsi plus proche de la troisième antenne 210 que de la deuxième antenne 208.

De même, la deuxième antenne 208 est disposée à une troisième distance de la troisième antenne 210, la première distance pouvant être plus grande que la troisième distance. La deuxième antenne 208 est ainsi plus proche de la troisième antenne 210 que de la première antenne 206.

Dans un exemple, la projection de la première antenne 206 dans le troisième plan de la troisième antenne 210 est disposée à une première distance minimale D1 de la projection de la deuxième antenne 208 dans le troisième plan et à une deuxième distance minimale D2 de la troisième antenne 210, la première distance minimale D1 étant plus grande que la deuxième distance minimale D2.

De même, la projection de la deuxième antenne 208 dans le troisième plan est disposée à une troisième distance minimale D3 de la troisième antenne 210, la première distance minimale D1 étant plus grande que la troisième distance minimale D3.

Comme le montre la figure 2, les première, deuxième et troisième antennes 206, 208, 210 peuvent être disposées de telle sorte que la projection de la première antenne 206 dans le troisième plan de la troisième antenne 210 s'étend à l'extérieur de la troisième antenne 210 et la projection de la deuxième antenne 208 s'étend à l'intérieur de la troisième antenne 210.

La troisième antenne 210 sépare ainsi la première antenne 206 de la deuxième antenne 208, ce qui permet de réduire l'effet de couplage parasite entre les première et deuxième antennes 206, 208.

Dans l'exemple ou les antennes 206, 208, 210 sont de forme sensiblement rectangulaire, afin de maximiser le couplage entre la première antenne 206 et la troisième antenne 210, la longueur de la première antenne 206 est sensiblement égale à la largeur de la troisième antenne 210. En outre, la longueur de la deuxième antenne 208 est peu inférieure à la longueur de la plus petite spire de la troisième antenne 210.

En variante, comme le montre la **figure 5****,** les première, deuxième et troisième antennes 206, 208, 210 peuvent être disposées de telle sorte que la projection de la première antenne 206 dans le troisième plan de la troisième antenne 210 s'étend à l'intérieur de la troisième antenne 210 et la projection de la deuxième antenne 208 s'étend à l'intérieur de la troisième antenne 210.

Dans l'exemple où le dispositif 200 est une carte à puce, le dispositif comprend un corps de carte, comprenant une première couche, les première et deuxième puces électroniques 202, 204 ainsi que les première, deuxième et troisième antennes 206, 208, 210 pouvant être disposées sur la même face ou sur des faces différentes de la première couche. Le corps de carte peut comporter au moins une couche additionnelle positionnée sur une face de la première couche. Le dispositif 200 peut comporter au moins une couche additionnelle positionnée sur l'autre face de la première couche. Chaque couche additionnelle peut être une couche adaptée à recevoir un motif d'impression ou une couche transparente adaptée à protéger la couche d'impression.

Dans une première variante, la première puce électronique 202 et la première antenne 206 sont positionnées sur un premier circuit imprimé, ou la première puce électronique 202 est positionnée sur le premier circuit imprimé. Le premier circuit imprimé peut comporter des plages de contact aptes à connecter la première puce 202 à un terminal externe afin que la première puce 202 puisse aussi communiquer avec un terminal externe via les plages de contact. Le corps de carte comporte alors une première cavité dans laquelle est positionné le premier circuit imprimé.

Dans une deuxième variante combinable avec la première variante, la deuxième puce 204 et la deuxième antenne 208 sont positionnées sur un deuxième circuit imprimé. Le corps de carte comporte alors une deuxième cavité dans laquelle est positionné le deuxième circuit imprimé.

Dans un exemple, la carte à puce comporte un écran adapté à afficher un code de sécurité, l'écran pouvant être positionné sur le deuxième circuit imprimé. La carte à puce peut en outre comporter des chiffres d'identification, par exemple positionnés en surface du corps de carte, le code de sécurité étant destiné à être utilisé en combinaison avec les chiffres d'identification pour effectuer un paiement, par exemple un paiement sur Internet.

Dans un exemple, la carte à puce est de format ID-1 défini par la norme ISO 7810. Le corps de carte est alors de dimensions de 85,6 millimètres par 53,98 millimètres par 0,76 millimètres.

La **figure 11** est une vue de dessus, en transparence, d'un dispositif 200 électronique de communication sans fil conforme à un exemple de mode de réalisation de l'invention, prenant la forme d'une carte à puce. La **figure 12** est une vue en coupe A-A du dispositif électronique de communication sans fil de la figure 11. Le dispositif 200 diffère du dispositif de la figure 5 en ce qu'il comporte un corps de carte 1100, un module 1110 comportant un premier circuit imprimé 1112, et un deuxième circuit imprimé 1120.

Le corps de carte 1100 comprend une première couche 1102 dans laquelle est disposée la troisième antenne 210 et dans laquelle peut être disposée la première antenne 206. En variante, la première antenne 206 est disposée sur le premier circuit imprimé 1112.

Le corps de carte 1100 peut en outre comporter une deuxième couche 1104 positionnée sur une face de la première couche 1102. De plus, le corps de carte 1100 peut comporter une troisième couche 1106 et une quatrième couche 1108, la première couche 1102 et l'éventuelle deuxième couche 1104 étant positionnées entre la troisième couche 1106 et la quatrième couche 1108. Dans un exemple, les première et deuxième couches 1102, 1104 sont des couches adaptées à recevoir un motif d'impression et les troisième et quatrième couches 1106, 1108 sont des couches adaptées à protéger les première et deuxième couches 1102, 1104.

Le corps de carte 1100 comporte une première cavité 1116, traversant au moins en partie la première couche 1102 et, dans un exemple, la troisième couche 1106. Lorsque la première antenne 206 est disposée sur la première couche 1102, la première cavité 1116 peut être positionnée de sorte à être entourée, en vue de dessus, par la première antenne 206 (cf. figure 11).

La première puce 202, ainsi que des plages de contacts 1114, aptes à connecter la première puce 202 à un terminal externe afin que la première puce 202 puisse aussi communiquer avec un terminal externe via les plages de contact, sont disposés sur le premier circuit imprimé 1112. Le module 1100 est disposé dans la première cavité 1116. La première puce 202 est connectée électriquement à la première antenne 206 par des moyens de connexion connus de l'homme du métier dans le domaine des cartes à puce, par exemple un adhésif anisotropique, un bump d'alliage conducteur ou encore des fils conducteurs.

Le corps de carte 1100 comporte une deuxième cavité 1118, traversant la première couche 1102 et éventuellement la deuxième couche 1104. La deuxième cavité est positionnée de sorte à être entourée, en vue de dessus, par la troisième antenne 210 (cf. figure 11). Le deuxième circuit imprimé 1120 est disposé dans la deuxième cavité 1118 et peut être maintenu dans la deuxième cavité 1118 au moyen d'un adhésif.

La deuxième antenne 208 et la deuxième puce électronique 204 sont disposés sur le deuxième circuit imprimé 1120. Le deuxième circuit imprimé peut en outre comporter un écran 1122 adapté à afficher un code de sécurité. De plus, des chiffres d'identification peuvent être formés sur la surface du corps de carte 1100, par exemple de la troisième couche 1016.

Revenant au dispositif 200 de la figure 5, la troisième bande de fréquence ΔF3 de fonctionnement de la troisième antenne 210 prise isolément peut être plus grande que la première bande de fréquence ΔF1 de fonctionnement du premier ensemble 212 pris isolément, comme le montre par exemple la figure 4. De même, troisième bande de fréquence ΔF3 de fonctionnement de la troisième antenne 210 prise isolément peut être plus grande que la deuxième bande de fréquence ΔF2 de fonctionnement du deuxième ensemble 214 pris isolément.

En outre, la largeur de la première bande de fréquence ΔF1 de fonctionnement du premier ensemble 212 pris isolément peut être sensiblement identique à la deuxième bande de fréquence ΔF2 de fonctionnement du deuxième ensemble 214 pris isolément. La largeur de la quatrième bande de fréquence ΔF13 de fonctionnement du troisième ensemble 216 est alors sensiblement identique à la cinquième bande de fréquence ΔF23 du quatrième ensemble 218, ce qui permet d'utiliser le même terminal externe pour communiquer avec la première puce électronique 202 et la deuxième puce électronique 204.

Dans un exemple, la quatrième bande de fréquence ΔF13 du troisième ensemble 216 est continue. De même la cinquième bande de fréquence ΔF23 du quatrième ensemble 218 peut être continue.

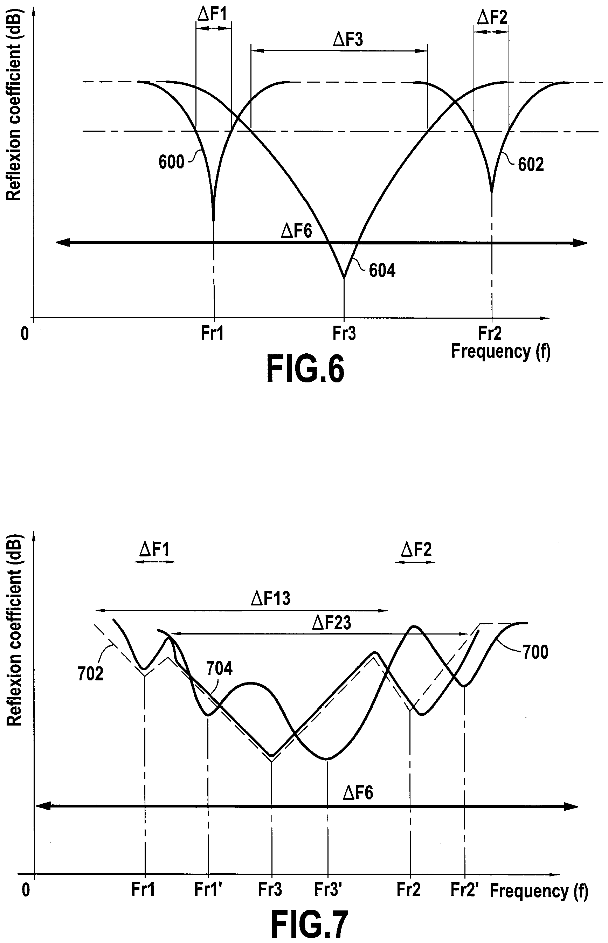

La **figure 6** représente un exemple d'évolution de coefficients de réflexion d'un dispositif 200 conforme à un exemple de mode de réalisation de l'invention, par exemple le dispositif 200 de la figure 2, de la figure 5, ou de la figure 11.

Plus précisément, la figure 6 montre un exemple de première courbe 600 montrant l'évolution du coefficient de réflexion du premier ensemble 212 pris isolément, en fonction de la fréquence, un exemple de deuxième courbe 602 montrant l'évolution du coefficient de réflexion du deuxième ensemble 214 pris isolément, en fonction de la fréquence, et un exemple de troisième courbe 604 montrant l'évolution du coefficient de réflexion de la troisième antenne 210 prise isolément, en fonction de la fréquence.

Comme le montre la figure 6, la première bande de fréquence ΔF1 de fonctionnement du premier ensemble 212 pris isolément correspond aux fréquences pour lesquelles les valeurs de la courbe 600 de coefficient de réflexion sont les plus faibles. Le coefficient de réflexion est le plus faible à une première fréquence de résonance Fr1 du premier ensemble 212, ladite fréquence de résonance Fr1 étant comprise dans la première bande de fréquence ΔF1.

La deuxième bande de fréquence ΔF2 de fonctionnement du deuxième ensemble 214 pris isolément correspond aux fréquences pour lesquelles les valeurs de la courbe 602 de coefficient de réflexion sont les plus faibles. Le coefficient de réflexion est le plus faible à une deuxième fréquence de résonance Fr2 du deuxième ensemble 214, ladite fréquence de résonance Fr2 étant comprise dans la deuxième bande de fréquence ΔF2.

La troisième bande de fréquence ΔF3 de fonctionnement de la troisième antenne 210 prise isolément correspond aux fréquences pour lesquelles les valeurs de la courbe 604 de coefficient de réflexion sont les plus faibles. Le coefficient de réflexion est le plus faible à une troisième fréquence de résonance Fr3 de la troisième antenne 210 prise isolément, comprise dans la troisième bande de fréquence ΔF3.

La troisième fréquence de résonance Fr3 est supérieure à la première fréquence de résonance Fr1, et est inférieure à la deuxième fréquence de résonance Fr2.

La **figure 7** représente des exemples de gabarits de résonance du dispositif 200 de la figure 6. Plus précisément, la figure 7 représente un gabarit de résonance 700 de l'ensemble résonant formé par les trois antennes 206, 208, 210 et les deux puces électroniques 202, 204 ayant les évolutions de coefficient de réflexion décrites en figure 6, lorsque les deux puces électroniques 202, 204 sont en veille.

Par gabarit de résonance, on entend les valeurs de transfert d'énergie dans la bande de fréquence de résonance de l'ensemble résonant. La bande de fréquence de résonance est la bande de fréquence sur laquelle le dispositif 200 est capable de recevoir ou d'envoyer de l'énergie électromagnétique. La bande de fréquence de résonance est plus large que et comprend la quatrième bande de fréquence ΔF13 pour laquelle une communication peut être établie. De même, la bande de fréquence de résonance est plus large que et comprend la cinquième bande de fréquence ΔF23 pour laquelle une communication peut être établie.

La figure 7 représente en outre un gabarit de résonance 702 de l'ensemble formé par les trois antennes 206, 208, 210 et les deux puces électroniques 202, 204 ayant les évolutions de coefficient de réflexion décrites en figure 6, lorsque la première puce électronique 202 est activée et lorsque la deuxième puce électronique 204 est en veille, pour une communication avec un terminal externe donné.

De plus, la figure 7 représente un gabarit de résonance 704 de l'ensemble résonant formé par les trois antennes 206, 208, 210 et les deux puces électroniques 202, 204 ayant les évolutions de coefficient de réflexion décrites en figure 6, lorsque la deuxième puce électronique 204 est activée et lorsque la première puce électronique 202 est en veille, pour une communication avec un terminal externe donné, et lorsque les paramètres Lₐ₁, Cₙ₁ et Rₐ₁ du premier ensemble 212 sont sensiblement identiques aux paramètres Lₐ₂, Cₙ₂ et Rₐ₂ du deuxième ensemble 214.

La figure 7 montre que les trois antennes 206, 208, 210 et les deux puces électroniques 202, 204 sont configurées de sorte que l'activation de la première puce électronique 202 ou de la deuxième puce électronique 204 diminue les fréquences de résonances. Cela s'explique par l'augmentation de la capacité d'une puce électronique 202, 204 lorsque la puce électronique 202, 204 est activée.

Les paramètres Lₐ₁, Cₙ₁ et Rₐ₁ du premier ensemble 212 étant sensiblement identiques aux paramètres Lₐ₂, Cₙ₂ et Rₐ₂ du deuxième ensemble 214, la courbe 702 et la courbe 704 sont sensiblement superposées. Lorsque la première puce électronique 202 est activée, la première puce électronique 202 communique selon la quatrième bande de fréquence ΔF13. La bande de fréquence du gabarit 702 hors de la quatrième bande de fréquence ΔF13 n'est pas utilisée pour communiquer, mais le flux électromagnétique de cette bande de fréquence est reçu. De même, lorsque la deuxième puce électronique 204 est activée, la deuxième puce électronique 204 communique selon la cinquième bande de fréquence ΔF23. La bande de fréquence du gabarit 704 hors de la cinquième bande de fréquence ΔF23 n'est pas utilisée pour communiquer, mais le flux électromagnétique de cette bande de fréquence est reçu.

Comme le montre la figure 7, la configuation des fréquences de résonnance décrite en référence à la figure 6, ainsi que leur proximité, permet à la quatrième bande de fréquence ΔF13 d'être continue, et permet à la cinquième bande de fréquence ΔF23 d'être continue. En variante, la fréquence de résonance Fr3 de la troisième antenne 210 prise isolément peut être inférieure à la fréquence de résonance Fr1, et peut être supérieure à la fréquence de résonance Fr2.

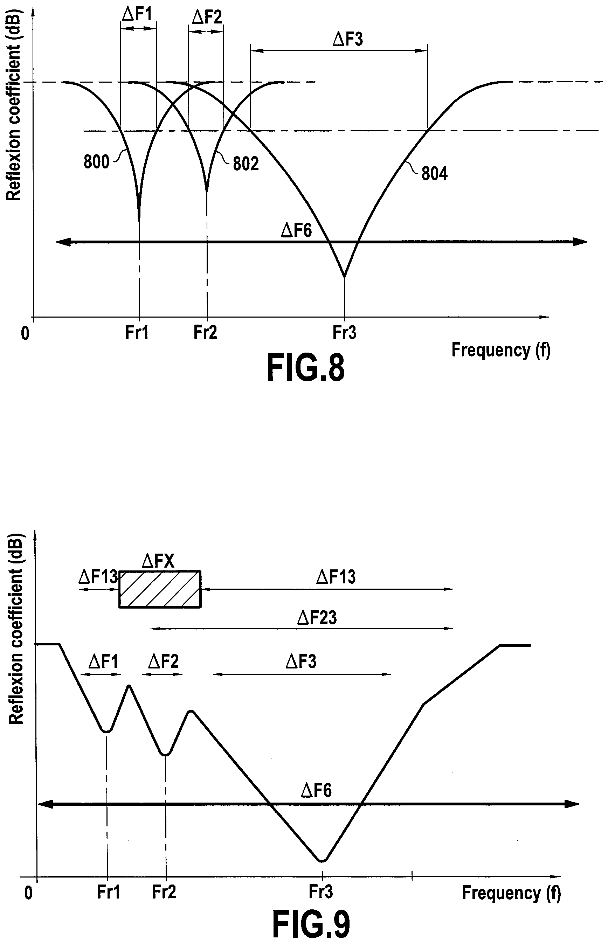

La **figure 8** représente un autre exemple d'évolution de coefficients de réflexion d'un dispositif 200 conforme à un exemple de mode de réalisation de l'invention, par exemple le dispositif 200 de la figure 2, de la figure 5, ou de la figure 11.

Plus précisément, la figure 8 montre un exemple de première courbe 800 montrant l'évolution du coefficient de réflexion du premier ensemble 212 pris isolément, en fonction de la fréquence, un exemple de deuxième courbe 802 montrant l'évolution du coefficient de réflexion du deuxième ensemble 214 pris isolément, en fonction de la fréquence, et un exemple de troisième courbe 804 montrant l'évolution du coefficient de réflexion de la troisième antenne 210 prise isolément, en fonction de la fréquence.

Dans cet exemple, la fréquence de résonance Fr3 de la troisième antenne 210 prise isolément est supérieure à la fréquence de résonance Fr1, et est supérieure à la fréquence de résonance Fr2.

La **figure 9** représente un exemple de gabarit de résonnance du dispositif de la figure 8, ou plus précisément un gabarit de résonance de l'ensemble formé par les trois antennes 206, 208, 210 et les deux puces électroniques 202, 204 ayant les évolutions de coefficient de réflexion décrites en figure 8, lorsque la première puce électronique 202 est activée et lorsque la deuxième puce électronique 204 est en veille, pour une communication avec un terminal externe donné. Comme le montre la figure 9, la configuration des fréquences de résonnance décrite en référence à la figure 8 ne permet pas à la quatrième bande de fréquence ΔF13 d'être continue.

Il existe en effet une bande de fréquence ΔFX selon laquelle la communication avec la première puce électronique 202 n'est pas possible, car le coefficient de réflexion de la première antenne 206 et le coefficient de réflexion de la deuxième antenne 208 ont des valeurs trop élevées dans cette bande de fréquence ΔFX. Ainsi, dans la bande de fréquence ΔFX, il n'y a aucune contribution de résonance de la première antenne 206, toute la résonance ne provenant que de la contribution de la deuxième antenne 208. Aucune composante spectrale de la bande de fréquence ΔFX ne vient de la résonance de la première antenne 206. Ainsi, un terminal externe, communiquant selon le premier protocole dans la bande de fréquence ΔFX ne pourra pas communiquer avec la première puce électronique 202.

Le dispositif décrit en référence aux figures 6 et 7 est ainsi plus avantageux que le dispositif décrit en référence aux figures 8 et 9, car il garantit la continuité des quatrième bande de fréquence ΔF13 et cinquième bande de fréquence ΔF23, et donc une largeur de bande plus importante.

Un rapprochement de la fréquence de résonance Fr1 à la fréquence de résonance Fr3 permettrait à la quatrième bande de fréquence ΔF13 d'être continue. Cependant, la largeur de la quatrième bande de fréquence ΔF13 ne serait pas équivalente à la largeur de la cinquième bande de fréquence ΔF23.

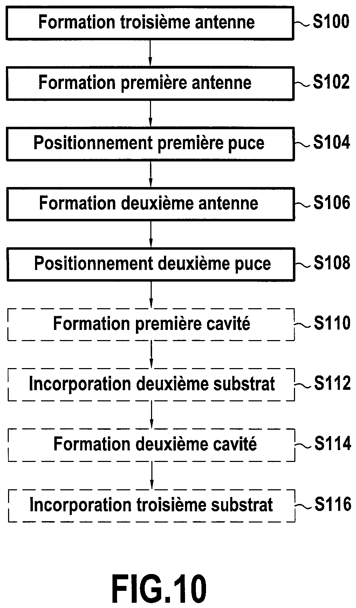

La **Figure 10** représente un procédé de fabrication d'un dispositif électronique conforme à un exemple de mode de réalisation de l'invention, par exemple le dispositif de la figure 2, le dispositif de la figure 5, ou le dispositif de la figure 11.

Dans une étape S100, la troisième antenne 210 est formée sur une couche d'un premier substrat comprenant au moins une couche. Dans l'exemple où le dispositif est une carte à puce, le premier substrat est le corps de carte et la couche sur laquelle est formée la troisième antenne 210 est la première couche du corps de carte. Dans l'exemple de la figure 11, le premier substrat est le corps de carte 1100 et la couche sur laquelle est formée la troisième antenne 210 est la première couche 1102.

Dans une étape S102, la première antenne 206 est formée sur un deuxième substrat ou sur le premier substrat. Dans un exemple où le dispositif est une carte à puce, le deuxième substrat est le premier circuit imprimé. Dans l'exemple de la figure 11, le deuxième substrat est le premier circuit imprimé 1112.

Dans une étape S104, la première puce 202 est positionnée sur le premier substrat ou sur le deuxième substrat, de sorte à être électriquement connectée à la première antenne 206.

Dans une étape S106, la deuxième antenne 208 est formée sur un troisième substrat ou sur le premier substrat. Dans un exemple où le dispositif est une carte à puce, le troisième substrat est le deuxième circuit imprimé. Dans l'exemple de la figure 11, le troisième substrat est le deuxième circuit imprimé 1120.

Dans une étape S108, la deuxième puce 204 est positionnée sur le premier substrat ou sur le troisième substrat, de sorte à être électriquement connectée à la deuxième antenne 208.

Dans le cas où la première antenne 206 est formée sur un deuxième substrat, le procédé comporte en outre une étape S110 de formation d'une première cavité dans le premier substrat, et une étape S112 d'incorporation du deuxième substrat dans la première cavité. Dans l'exemple de la figure 11, la première cavité est la première cavité 1116.

En outre, dans le cas où la deuxième antenne 208 est formée sur un troisième substrat, le procédé comporte en outre une étape S114 de formation d'une deuxième cavité dans le premier substrat, et une étape S116 d'incorporation du troisième substrat dans la deuxième cavité. Dans l'exemple de la figure 11, la deuxième cavité est la deuxième cavité 1118.

Les antennes 206, 208, 210 sont formées de sorte que la troisième antenne 210 est adaptée pour être couplée de manière électromagnétique avec la première antenne 206 et la deuxième antenne 208, de sorte que la première puce électronique 202 est configurée pour communiquer avec un premier terminal externe, selon un premier protocole, au moyen d'une première paire d'antenne formée par la première antenne 206 et la troisième antenne 210, et la deuxième puce électronique 204 est configurée pour communiquer avec le premier terminal externe et/ou un deuxième terminal externe, selon un deuxième protocole, au moyen une deuxième paire d'antenne formée par la deuxième antenne 208 et la troisième antenne 210.

## Revendications

1. Dispositif (200) électronique de communication sans fil comprenant :
• une première puce électronique (202) et une deuxième puce électronique (204),
• une première antenne (206) connectée électriquement à la première puce électronique (202), et
• une deuxième antenne (208) connectée électriquement à la deuxième puce électronique (204),
une troisième antenne (210) adaptée pour être couplée de manière électromagnétique avec la première antenne (206) et la deuxième antenne (208), **caractérisé en ce que** :
• la première puce électronique (202) est configurée pour communiquer avec un premier terminal externe, selon un premier protocole, au moyen d'une première paire d'antenne formée par la première antenne (206) et la troisième antenne (210), et
• la deuxième puce électronique (204) est configurée pour communiquer avec le premier terminal externe et/ou un deuxième terminal externe, selon un deuxième protocole, au moyen une deuxième paire d'antenne formée par la deuxième antenne (208) et la troisième antenne (210),
dans lequel les première, deuxième et troisième antennes (206, 208, 210) sont sensiblement planes et présentent chacune une forme allongée définissant une longueur et une largeur, les première, deuxième et troisième antennes (206, 208, 210) étant disposées de telle sorte que :
• la projection de la direction longitudinale de la première antenne (206) dans le plan de la troisième antenne (210) est parallèle à la direction latérale de la troisième antenne (210), et
• la projection de la direction longitudinale de la deuxième antenne (208) dans le plan de la troisième antenne (210) est parallèle à la direction longitudinale de la troisième antenne (210).

2. Dispositif électronique selon la revendication 1, dans lequel la surface délimitée par la troisième antenne (210) est supérieure à la surface délimitée par la première antenne (206) et/ou la surface délimitée par la deuxième antenne (208).

3. Dispositif électronique selon la revendication 1 ou 2, dans lequel la surface délimitée par la première antenne (206) est sensiblement identique à la surface délimitée par la deuxième antenne (208).

4. Dispositif électronique selon l'une quelconque des revendications 1 à 3, dans lequel la première antenne (206) est disposée à une première distance (D1) de la deuxième antenne (208) et à une deuxième distance (D2) de la troisième antenne (210), la première distance (D1) étant plus grande que la deuxième distance (D2).

5. Dispositif électronique selon l'une quelconque des revendications 1 à 4, dans lequel la troisième antenne (210) est sensiblement plane et les première, deuxième et troisième antennes (206, 208, 210) sont disposées de telle sorte que la projection de la première antenne (206) dans le plan de la troisième antenne (210) s'étend à l'extérieur de la troisième antenne (210) et la projection de la deuxième antenne (208) dans le plan de la troisième antenne (210) s'étend à l'intérieur de la troisième antenne (210).

6. Dispositif électronique selon l'une quelconque des revendications 1 à 5, dans lequel la bande de fréquence (ΔF3) de fonctionnement de la troisième antenne (210) prise isolément est plus grande que la bande de fréquence (ΔF1) de fonctionnement d'un premier ensemble (212) comportant la première puce électronique (202) et la première antenne (206) pris isolément ou que la bande de fréquence (ΔF2) de fonctionnement d'un deuxième ensemble (214) comportant la deuxième puce électronique (204) et la deuxième antenne (208) pris isolément.

7. Dispositif électronique selon l'une quelconque des revendications 1 à 6, dans lequel la largeur de la bande de fréquence (ΔF1) de fonctionnement d'un premier ensemble (212) comportant la première puce électronique (202) et la première antenne (206) pris isolément est sensiblement identique à la bande de fréquence (ΔF2) de fonctionnement d'un deuxième ensemble (214) comportant la deuxième puce électronique (204) et la deuxième antenne (208) pris isolément.

8. Dispositif électronique selon l'une quelconque des revendications 1 à 7, dans lequel :
• un troisième ensemble (216) comportant la première puce (202) et la première paire d'antenne fonctionne dans une première bande de fréquence continue (ΔF13), et
• un quatrième ensemble (218) comportant la deuxième puce (204) et la deuxième paire d'antenne fonctionne dans une deuxième bande de fréquence continue (ΔF23).

9. Dispositif électronique selon l'une quelconque des revendications 1 à 8, dans lequel le protocole de communication de la première puce électronique (202) est défini par la norme ISO 14443 et le protocole de communication de la deuxième puce électronique (204) est défini par la norme ISO 15693.

10. Dispositif électronique selon l'une quelconque des revendications 1 à 9, dans lequel :
• la première puce électronique (202) est configurée pour communiquer avec le premier terminal externe, au moyen de la première paire d'antenne, à une fréquence d'environ 13, 56 mégahertz, et/ou
• la deuxième puce électronique (204) est configurée pour communiquer avec le premier terminal externe et/ou le deuxième terminal externe, au moyen de la deuxième paire d'antenne, à une fréquence d'environ 13, 56 mégahertz.

11. Dispositif électronique selon l'une quelconque des revendications 1 à 10, dans lequel la première puce électronique (202) est configurée pour effectuer un paiement et la deuxième puce électronique (204) est configurée pour contrôler un composant électronique dudit dispositif.

12. Dispositif électronique selon la revendication 11, dans lequel le composant électronique est un écran adapté à afficher un code de sécurité.

13. Dispositif électronique selon la revendication 12, comportant des chiffres d'identification, le code de sécurité étant destiné à être utilisé en combinaison avec les chiffres d'identification pour effectuer un paiement.

14. Dispositif électronique selon l'une quelconque des revendications 1 à 13, ledit dispositif électronique étant une carte à puce de format ID-1 défini par la norme ISO 7810.

15. Procédé de fabrication d'un dispositif électronique selon l'une des revendications 1 à 14, ledit procédé comprenant :
• la formation (S100) de la troisième antenne (210) sur une couche d'un premier substrat comprenant au moins une couche,
• la formation (S102) de la première antenne (206) sur un deuxième substrat ou sur le premier substrat,
• le positionnement (S104) de la première puce (202) sur le premier substrat ou sur le deuxième substrat, de sorte à être électriquement connectée à la première antenne (206),
• la formation (S106) de la deuxième antenne (208) sur un troisième substrat ou sur le premier substrat, et
• le positionnement (S108) de la deuxième puce (204) sur le premier substrat ou sur le troisième substrat, de sorte à être électriquement connectée à la deuxième antenne (208).

## Patentansprüche

1. Elektronische Vorrichtung (200) zur drahtlosen Kommunikation, umfassend:
• einen ersten elektronischen Chip (202) und einen zweiten elektronischen Chip (204),
• eine erste Antenne (206), die elektrisch mit dem ersten elektronischen Chip (202) verbunden ist, und
• eine zweite Antenne (208), die elektrisch mit dem zweiten elektronischen Chip (204) verbunden ist,
• eine dritte Antenne (210), die dazu geeignet ist, elektromagnetisch mit der ersten Antenne (206) und der zweiten Antenne (208) gekoppelt zu werden,
**dadurch gekennzeichnet, dass**:
• der erste elektronische Chip (202) dazu ausgestaltet ist, mit einem ersten externen Endgerät gemäß einem ersten Protokoll mittels eines ersten Antennenpaars zu kommunizieren, das aus der ersten Antenne (206) und der dritten Antenne (210) gebildet wird, und
• der zweite elektronische Chip (204) dazu ausgestaltet ist, mit dem ersten externen Endgerät und/oder einem zweiten externen Endgerät gemäß einem zweiten Protokoll mittels eines zweiten Antennenpaars zu kommunizieren, das aus der zweiten Antenne (208) und der dritten Antenne (210) gebildet wird, und
wobei die erste, zweite und dritte Antenne (206, 208, 210) im Wesentlichen flächig sind und jeweils eine längliche Form aufweisen, die eine Länge und eine Breite definiert, wobei die erste, zweite und dritte Antenne (206, 208, 210) auf solche Weise angeordnet sind, dass:
• der Verlauf der Längsrichtung der ersten Antenne (206) in der Ebene der dritten Antenne (210) parallel zu der Seitenrichtung der dritten Antenne (210) ist, und
• der Verlauf der Längsrichtung der zweiten Antenne (208) in der Ebene der dritten Antenne (210) parallel zu der Längsrichtung der dritten Antenne (210) ist.

2. Elektronische Vorrichtung nach Anspruch 1, wobei die durch die dritte Antenne (210) begrenzte Oberfläche größer als die durch die erste Antenne (206) begrenzte Oberfläche und/oder die durch die zweite Antenne (208) begrenzte Oberfläche ist.

3. Elektronische Vorrichtung nach Anspruch 1 oder 2, wobei die durch die erste Antenne (206) begrenzte Oberfläche im Wesentlichen identisch mit der durch die zweite Antenne (208) begrenzten Oberfläche ist.

4. Elektronische Vorrichtung nach einem der Ansprüche 1 bis 3, wobei die erste Antenne (206) in einem ersten Abstand (D1) von der zweiten Antenne (208) und in einem zweiten Abstand (D2) von der dritten Antenne (210) angeordnet ist, wobei der erste Abstand (D1) größer als der zweite Abstand (D2) ist.

5. Elektronische Vorrichtung nach einem der Ansprüche 1 bis 4, wobei die dritte Antenne (210) im Wesentlichen flächig ist und die erste, zweite und dritte Antenne (206, 208, 210) auf solche Weise angeordnet sind, dass der Verlauf der ersten Antenne (206) in der Ebene der dritten Antenne (210) sich außerhalb der dritten Antenne (210) erstreckt und der Verlauf der zweiten Antenne (208) in der Ebene der dritten Antenne (210) sich innerhalb der dritten Antenne (210) erstreckt.

6. Elektronische Vorrichtung nach einem der Ansprüche 1 bis 5, wobei das Frequenzband (ΔF3) der Funktion der dritten Antenne (210) isoliert betrachtet breiter ist als das Frequenzband (ΔF1) der Funktion einer ersten Anordnung (212), die den ersten elektronischen Chip (202) und die erste Antenne (206) beinhaltet, isoliert betrachtet, oder als das Frequenzband (ΔF2) der Funktion einer zweiten Anordnung (214), die den zweiten elektronischen Chip (204) und die zweite Antenne (208) beinhaltet, isoliert betrachtet.

7. Elektronische Vorrichtung nach einem der Ansprüche 1 bis 6, wobei Breite des Frequenzbands (ΔF1) der Funktion einer ersten Anordnung (212), die den ersten elektronischen Chip (202) und die erste Antenne (206) beinhaltet, isoliert betrachtet im Wesentlichen identisch ist mit dem Frequenzband (ΔF2) der Funktion einer zweiten Anordnung (214), die den zweiten elektronischen Chip (204) und die zweite Antenne (208) beinhaltet, isoliert betrachtet.

8. Elektronische Vorrichtung nach einem der Ansprüche 1 bis 7, wobei:
• eine dritte Anordnung (216), die den ersten Chip (202) und das erste Antennenpaar beinhaltet, in einem ersten durchgehenden Frequenzband (ΔF13) arbeitet, und
• eine vierte Anordnung (218), die den zweiten Chip (204) und das zweite Antennenpaar beinhaltet, in einem zweiten durchgehenden Frequenzband (ΔF23) arbeitet.

9. Elektronische Vorrichtung nach einem der Ansprüche 1 bis 8, wobei das Kommunikationsprotokoll des ersten elektronischen Chips (202) durch die Norm ISO 14443 definiert ist, und das Kommunikationsprotokoll des zweiten elektronischen Chips (204) durch die Norm ISO 15693 definiert ist.

10. Elektronische Vorrichtung nach einem der Ansprüche 1 bis 9, wobei:
• der erste elektronische Chip (202) dazu ausgestaltet ist, mit dem ersten externen Endgerät mittels des ersten Antennenpaars bei einer Frequenz von ungefähr 13,56 Megahertz zu kommunizieren, und/oder
• der zweite elektronische Chip (204) dazu ausgestaltet ist, mit dem ersten externen Endgerät und/oder dem zweiten externen Endgerät mittels des zweiten Antennenpaars bei einer Frequenz von ungefähr 13,56 Megahertz zu kommunizieren.

11. Elektronische Vorrichtung nach einem der Ansprüche 1 bis 10, wobei der erste elektronische Chip (202) dazu ausgestaltet ist, eine Zahlung durchzuführen, und der zweite elektronische Chip (204) dazu ausgestaltet ist, eine elektronische Komponente der Vorrichtung zu steuern.

12. Elektronische Vorrichtung nach Anspruch 11, wobei die elektronische Komponente ein Bildschirm ist, der dazu geeignet ist, einen Sicherheitscode anzuzeigen.

13. Elektronische Vorrichtung nach Anspruch 12, die Identifikationsziffern beinhaltet, wobei der Sicherheitscode dazu bestimmt ist, in Kombination mit den Identifikationsziffern verwendet zu werden, um eine Zahlung durchzuführen.

14. Elektronische Vorrichtung nach einem der Ansprüche 1 bis 13, wobei die elektronische Vorrichtung eine Chipkarte im Format ID-1 ist, das durch die Norm ISO 7810 definiert wird.

15. Verfahren zur Herstellung einer elektronischen Vorrichtung nach einem der Ansprüche 1 bis 14, wobei das Verfahren umfasst:
• die Ausbildung (S100) der dritten Antenne (210) auf einer Schicht eines ersten Substrats, umfassend zumindest eine Schicht,
• die Ausbildung (S102) der ersten Antenne (206) auf einem zweiten Substrat oder auf dem ersten Substrat,
• die Positionierung (S104) des ersten Chips (202) auf dem ersten Substrat oder auf dem zweiten Substrat auf solche Weise, dass er elektrisch mit der ersten Antenne (206) verbunden ist,
• die Ausbildung (S106) der zweiten Antenne (208) auf einem dritten Substrat oder auf dem ersten Substrat, und
• die Positionierung (S108) des zweiten Chips (204) auf dem ersten Substrat oder auf dem dritten Substrat auf solche Weise, dass er elektrisch mit der zweiten Antenne (208) verbunden ist.

## Claims

1. A wireless electronic communication device (200) comprising:
• a first electronic chip (202) and a second electronic chip (204),
• a first antenna (206) electrically connected to the first electronic chip (202), and
• a second antenna (208) electrically connected to the second electronic chip (204),
• a third antenna (210) adapted to be electromagnetically coupled with the first antenna (206) and the second antenna (208),
**characterized in that**:
• the first electronic chip (202) is configured to communicate with a first external terminal, according to a first protocol, by means of a first pair of antennas formed by the first antenna (206) and the third antenna (210), and
• the second electronic chip (204) is configured to communicate with the first external terminal and/or a second external terminal, according to a second protocol, by means of a second pair of antennas formed by the second antenna (208) and the third antenna (210),
wherein the first, second and third antennas (206, 208, 210) are substantially planar and each have an elongated shape defining a length and a width, the first, second and third antennas (206, 208, 210) being disposed such that:
• the projection of the longitudinal direction of the first antenna (206) in the plane of the third antenna (210) is parallel to the lateral direction of the third antenna (210), and
• the projection of the longitudinal direction of the second antenna (208) in the plane of the third antenna (210) is parallel to the longitudinal direction of the third antenna (210).

2. The electronic device according to claim 1, wherein the surface delimited by the third antenna (210) is greater than the surface delimited by the first antenna (206) and/or the surface delimited by the second antenna (208).

3. The electronic device according to claim 1 or 2, wherein the surface delimited by the first antenna (206) is substantially identical to the surface delimited by the second antenna (208).

4. The electronic device according to any one of claims 1 to 3, wherein the first antenna (206) is disposed at a first distance (D1) from the second antenna (208) and at a second distance (D2) from the third antenna (210), the first distance (D1) being greater than the second distance (D2).

5. The electronic device according to any one of claims 1 to 4, wherein the third antenna (210) is substantially planar and the first, second and third antennas (206, 208, 210) are disposed such that the projection of the first antenna (206) in the plane of the third antenna (210) extends outside the third antenna (210) and the projection of the second antenna (208) in the plane of the third antenna (210) extends inside the third antenna (210).

6. The electronic device according to any one of claims 1 to 5, wherein the operating frequency band (ΔF3) of the third antenna (210) taken separately is greater than the operating frequency band (ΔF1) of a first assembly (212) including the first electronic chip (202) and the first antenna (206) taken separately or than the operating frequency band (ΔF2) of a second assembly (214) including the second electronic chip (204) and the second antenna (208) taken separately.

7. The electronic device according to any one of claims 1 to 6, wherein the width of the operating frequency band (ΔF1) of a first assembly (212) including the first electronic chip (202) and the first antenna (206) taken separately is substantially identical to the operating frequency band (ΔF2) of a second assembly (214) including the second electronic chip (204) and the second antenna (208) taken separately.

8. The electronic device according to any one of claims 1 to 7, wherein:
• a third assembly (216) including the first chip (202) and the first pair of antennas operates in a first continuous frequency band (ΔF13), and
• a fourth assembly (218) including the second chip (204) and the second pair of antennas operates in a second continuous frequency band (ΔF23).

9. The electronic device according to any one of claims 1 to 8, wherein the communication protocol of the first electronic chip (202) is defined by the ISO 14443 standard and the communication protocol of the second electronic chip (204) is defined by the ISO 15693 standard.

10. The electronic device according to any one of claims 1 to 9, wherein:
• the first electronic chip (202) is configured to communicate with the first external terminal, by means of the first pair of antennas, at a frequency of approximately 13.56 megahertz, and/or
• the second electronic chip (204) is configured to communicate with the first external terminal and/or the second external terminal, by means of the second pair of antennas, at a frequency of approximately 13.56 megahertz.

11. The electronic device according to any one of claims 1 to 10, wherein the first electronic chip (202) is configured to make a payment and the second electronic chip (204) is configured to control an electronic component of said device.

12. The electronic device according to claim 11, wherein the electronic component is a screen adapted to display a security code.

13. The electronic device according to claim 12, including identification numbers, the security code being intended to be used in combination with the identification numbers to make a payment.

14. The electronic device according to any one of claims 1 to 13, said electronic device being a smart card of ID-1 format defined by the ISO 7810 standard.

15. A method for manufacturing an electronic device according to any of claims 1 to 14, said method comprising:
• the formation (S100) of the third antenna (210) on a layer of a first substrate comprising at least one layer,
• the formation (S102) of the first antenna (206) on a second substrate or on the first substrate,
• the positioning (S104) of the first chip (202) on the first substrate or on the second substrate, so as to be electrically connected to the first antenna (206),
• the formation (S106) of the second antenna (208) on a third substrate or on the first substrate, and
• the positioning (S108) of the second chip (204) on the first substrate or on the third substrate, so as to be electrically connected to the second antenna (208).
